# FASCICULE DE BREVET EUROPEEN

(11) **EP 1 075 907 B1**
(45) Date de publication et mention de la délivrance du brevet: **12.10.2005**
(21) Numéro de dépôt: 00402206.7
(22) Date de dépôt: 02.08.2000
(51) Int. Cl.: B25J 3/00, G21F 7/06

(54) **Télémanipulateur**
Master-slave Manipulator
Master-slave manipulator

(30) Priorité: 13.08.1999 FR 9910479
(43) Date de publication de la demande: 14.02.2001
(73) Titulaire: Societe D'Innovations Techniques SIT, 86100 Chatellerault (FR)
(72) Inventeur: Garnier, André, 86200 Loudun (FR)
(74) Mandataire: Kaspar, Jean-Georges

(56) Documents cités:
- FR-A- 1 356 029
- FR-E- 86 178
- US-A- 3 507 163
- US-A- 4 474 518

## Description

L'invention est relative à un télémanipulateur, du type comportant un bras maître et un bras esclave destiné à reproduire les mouvements du bras maître.

Dans les activités présentant des risques de type nucléaire, bactériologique ou chimique, on sépare le personnel des produits présentant de tels risques en plaçant ces produits à l'intérieur d'une enceinte de confinement. Les interventions sont alors effectuées de préférence au moyen de télémanipulateurs de type connu, en transmettant les mouvements de l'opérateur à un bras esclave situé à l'intérieur de l'enceinte de confinement.

Les télémanipulateurs anciens, du type décrit dans les documents FR 1.356.029 et FR 86.178 ont été améliorés pour faciliter la maintenance.

Cette amélioration a conduit à une différenciation des technologies en une technologie dite "américaine", et une technologie dite "européenne".

La présente invention est relative à la technologie de télémanipulateur dite "européenne".

Généralement, le bras esclave situé à l'intérieur de l'enceinte de confinement est apte à être dételé d'un mécanisme traversant une paroi de l'enceinte de confinement et reliant le bras esclave à un bras maître situé à l'extérieur de l'enceinte de confinement et destinée à recevoir des interactions de l'opérateur.

De manière connue, le bras maître est solidaire d'un tube de raccordement audit mécanisme traversant la paroi de l'enceinte de confinement, de manière à faire recopier les mouvements de l'opérateur par le bras esclave situé à l'intérieur de l'enceinte de confinement.

Dans la technique habituellement utilisée en Europe, les télémanipulateurs comportent trois parties séparables : le bras esclave situé dans l'enceinte de confinement, la traversée centrale et le bras maître solidaire de son tube de raccordement.

Ces télémanipulateurs de type connu donnent généralement satisfaction, mais sont de mise en oeuvre complexe, ce qui pénalise la productivité et rend la maintenance du télémanipulateur relativement coûteuse et difficile.

L'invention a pour but de remédier aux inconvénients de la technique connue, en proposant un nouveau télémanipulateur permettant de faciliter la maintenance et d'accroître la productivité des activités effectuées grâce à ce télémanipulateur.

L'invention a pour objet un télémanipulateur du type comportant un bras maître et un bras esclave destiné à reproduire les mouvements du bras maître ; ledit bras esclave étant situé à l'intérieur d'une enceinte de confinement et étant apte à être dételé, ledit bras maître étant situé à l'extérieur de l'enceinte de confinement et lesdits bras maître et esclave étant reliés par un mécanisme traversant une paroi de l'enceinte de confinement ; ledit bras maître étant relié à un tube de raccordement audit mécanisme traversant la paroi de l'enceinte de confinement; le mécanisme traversant étant monté à demeure dans la paroi et présentant une première interface de raccordement avec le bras esclave et une deuxième interface avec le tube de raccordement ; caractérisé en ce que le bras maître et le tube de raccordement sont reliés à des moyens de solidarisation et de désolidarisation déterminés pour permettre leurs connexions ou leurs déconnexions modulaires, de manière à faciliter la maintenance du télémanipulateur et en accroître la productivité.

Selon d'autres caractéristiques de l'invention :
- lesdits moyens de solidarisation et de désolidarisation comportent des moyens de guidage,
- les moyens de guidage comportent un pion de guidage avec une partie d'engagement conique et une partie cylindrique aptes à s'engager dans un alésage cylindrique complémentaire,
- lesdits moyens de solidarisation et de désolidarisation comportent des moyens de centrage,
- les moyens de centrage comportent deux brides concentriques aptes à s'engager coaxialement l'une dans l'autre,
- lesdits moyens de solidarisation et de désolidarisation comportent des moyens d'attelage et de dételage,
- les moyens d'attelage et de dételage comportent un boulon de serrage pivotant dans une chape et apte à s'engager avec une pièce de fixation correspondante,
- lesdits moyens de solidarisation et de désolidarisation comportent des moyens de transmission de mouvement,
- lesdits moyens de transmission de mouvement comportent des organes coopérants,
- lesdits moyens de solidarisation et de désolidérisation comportent un bloc d'adaptation intermédiaire.

L'invention sera mieux comprise grâce à la description qui va suivre donnée à titre d'exemple non limitatif en référence aux dessins annexés dans lesquels :
- la figure 1 représente schématiquement une vue éclatée en élévation avec coupe partielle d'un télémanipulateur selon l'état de la technique connu,
- la figure 2 représente schématiquement une vue éclatée en élévation avec coupe partielle d'un télémanipulateur selon l'invention,
- la figure 3 représente schématiquement une vue partielle en élévation à échelle agrandie d'un télémanipulateur selon l'invention,
- la figure 4 représente schématiquement une vue partielle en perspective de moyens de solidarisation d'un télémanipulateur selon l'invention,
- la figure 5 représente schématiquement une vue en perspective selon la flèche V de la figure 4 d'un bloc d'adaptation intermédiaire de télémanipulateur selon l'invention.

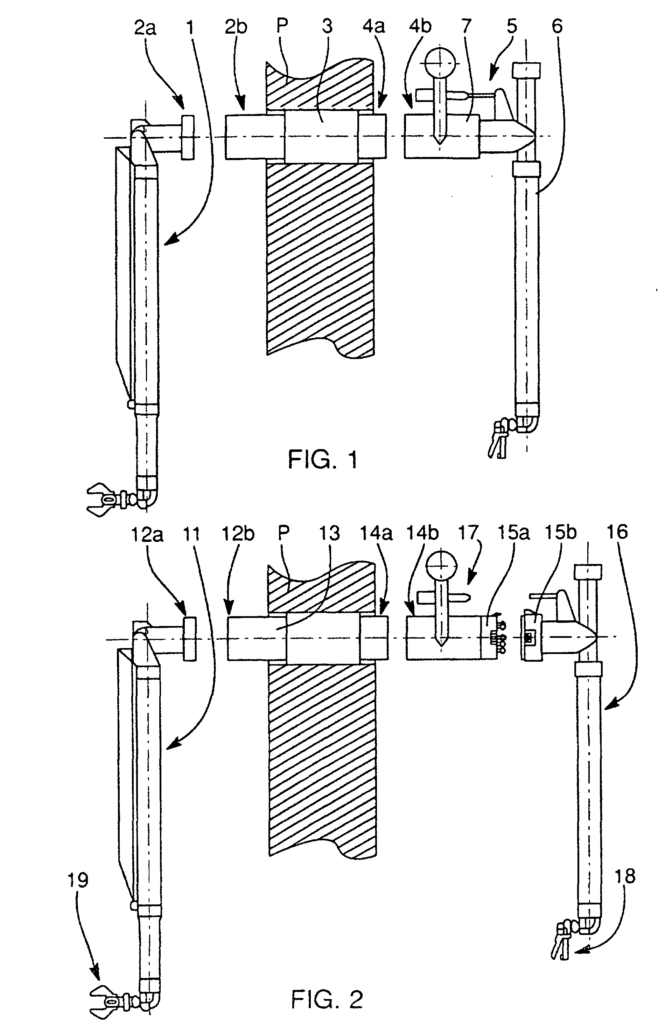

En référence à la figure 1, un télémanipulateur de l'état de la technique connu est représenté en position d'utilisation. Le télémanipulateur connu est représenté en position éclatée, avec de part et d'autre de la paroi P d'une enceinte de confinement : un bras esclave 1 situé à l'intérieur de l'enceinte de confinement, une première interface de raccordement 2a, 2b à un mécanisme 3 traversant la paroi P de l'enceinte de confinement, une deuxième interface de raccordement 4a, 4b du mécanisme traversant 3 à un ensemble 5 de bras maître.

L'ensemble 5 de bras maître comporte le bras maître 6 proprement dit et un tube de raccordement 7 dont est solidaire le bras maître 6.

Le télémanipulateur connu de l'art antérieur peut ainsi être séparé en trois parties : le bras esclave 1, le mécanisme traversant 3 monté à demeure à travers la paroi P de l'enceinte de confinement, et l'ensemble 5 de bras maître situé à l'extérieur de l'enceinte de confinement.

Après montage des trois parties, le mouvement de l'opérateur appliqué à l'ensemble 5 de bras maître est fidèlement reproduit par le bras esclave 1 situé à l'intérieur de l'enceinte de confinement.

Cette disposition donne généralement satisfaction, mais présente en cas de panne l'inconvénient d'une maintenance difficile due au poids élevé de l'ensemble 5 de bras maître, ce qui diminue les temps opératoires et par conséquent la productivité de télémanipulation.

En référence à la figure 2, un télémanipulateur selon l'invention comporte un bras esclave 11 situé à l'intérieur d'une enceinte de confinement comportant une paroi P ; un mécanisme traversant 13 monté à demeure dans la paroi P et présentant une première interface 12b, 12a de raccordement avec le bras esclave 11 et une deuxième interface 14a, 14b avec un tube de raccordement 17 situé à l'extérieur de l'enceinte de confinement, est relié à un bras maître 16 destiné à interagir avec l'opérateur. La liaison entre le bras maître 16 et le tube de raccordement 17 résulte de la coopération de moyens 15a, 15b de solidarisation et de désolidarisation auxquels le tube de raccordement 17 et le bras maître 16 sont respectivement reliés.

Les moyens 15a, 15b de solidarisation et de désolidarisation sont prédéterminés pour permettre une connexion ou une déconnexion modulaire des éléments 16 et 17, tout en permettant la transmission des mouvements de l'opérateur depuis la poignée 18 du bras maître 16 jusqu'à la pince 19 du bras esclave 11.

La solidarisation et la désolidarisation procurée par les moyens 15a, 15b doit ainsi non seulement permettre une connexion ou une déconnexion modulaire, mais également transmettre avec précision et dans toutes les directions les mouvements du bras maître 16 au bras esclave 11.

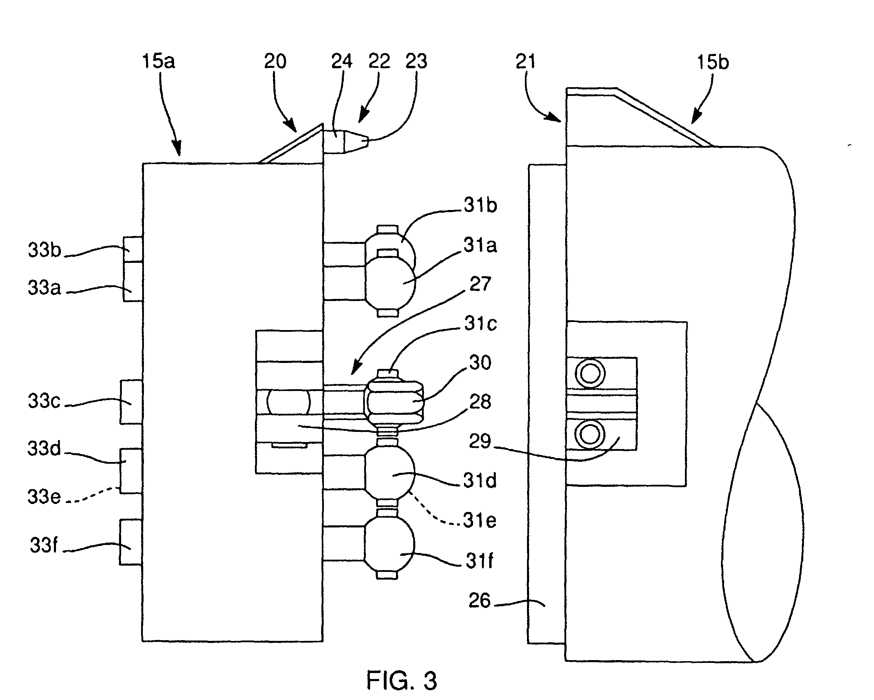

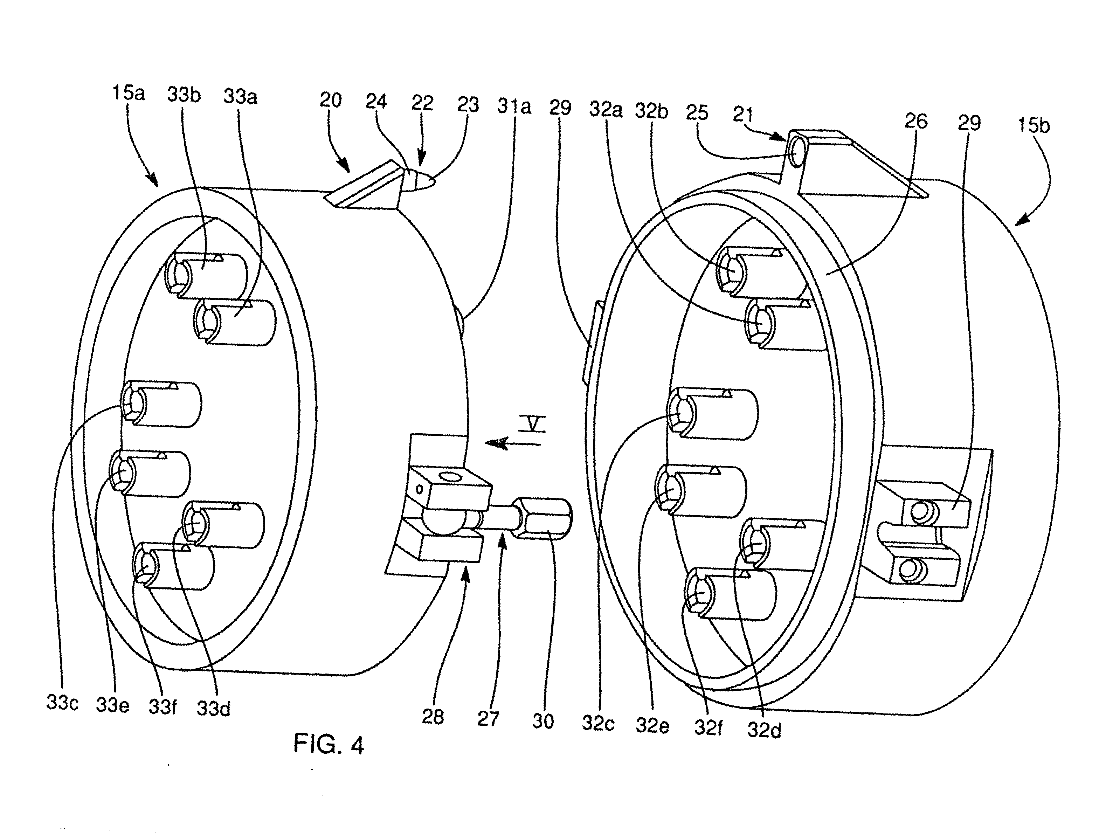

En référence aux figures 3 et 4, les éléments identiques ou fonctionnellement équivalents aux éléments de la figure 2 sont repérés par des chiffres de référence identiques aux chiffres de référence de la figure 2.

Le moyen 15a de solidarisation et de désolidarisation relié au tube de raccordement 17 est constitué de préférence sous forme d'un bloc d'adaptation intermédiaire.

Le moyen 15b de solidarisation et de désolidarisation situé du côté du bras maître 16 reste de préférence solidaire du bras maître 16.

Pour permettre une connexion et une déconnexion facile, on prévoit des moyens de guidage 20, 21 comportant par exemple un pion 22 de guidage avec une partie 23 d'engagement conique et une partie 24 cylindrique apte à s'engager dans un alésage 25 cylindrique faisant partie du moyen 20 de guidage situé du côté du bras maître 16.

Bien entendu, l'invention couvre toute modification comportant des moyens de guidage ou d'indexation fonctionnellement équivalents aux moyens de guidage 20 et 21.

Le moyen 15a est de préférence prédéterminé pour être centré sur une collerette 26 du moyen 15b : de préférence, le centrage est réalisé par deux brides concentriques aptes à s'engager coaxialement l'une dans l'autre, par exemple une collerette 26 et une partie cylindrique 35 du moyen 15a venant s'adapter sur et autour de cette collerette 26.

Pour assurer une connexion et une déconnexion rapides, les moyens 15a, 15b comportent également des moyens d'attelage et de dételage. Ces moyens d'attelage et de dételage comportent par exemple un boulon 27 monté pivotant dans une chape 28, destiné à s'engager derrière une pièce 29 de fixation complémentaire en vue d'effectuer la solidarisation et le serrage par vissage de l'écrou 30 engagé derrière cette pièce 29.

De préférence, ces moyens d'attelage et de dételage sont régulièrement répartis en périphérie des moyens de solidarisation 15a, 15b : dans le cas de deux points de fixation, on place avantageusement les moyens de d'attelage et de dételage dans des positions diamètralement opposées.

Enfin, les moyens 15a, 15b comportent des organes de transmission de mouvement, afin de permettre une recopie des mouvements de l'opérateur par le bras esclave 11. Ces moyens de transmission de mouvement comportent des organes coopérants 31a, 31 b, 31c, 31 d, 31 e, 31f, par exemple comportant des extrémités sphériques à embouts cylindriques coopérant respectivement avec des organes correspondants 32a, 32b, 32c, 32d, 32e, et 32f présentant chacun une forme d'alésage avec deux rainures diamètralement opposées.

Cette configuration permet un engagement facile et une transmission fidèle de mouvement.

Dans le cas où un moyen tel que le moyen 15a de solidarisation et de désolidarisation est constitué sous forme d'un bloc d'adaptation intermédiaire, on prévoit que les organes 31a à 31f soient reliés respectivement à des extrémités correspondantes 33a à 33f similaires aux organes 32a à 32f situés sur l'autre moyen 15b de solidarisation et de désolidarisation. Cette disposition assure une transmission en ligne des mouvements de rotation appliqués par la main de l'opérateur au bras maître 16 et reproduits par le bras esclave 11.

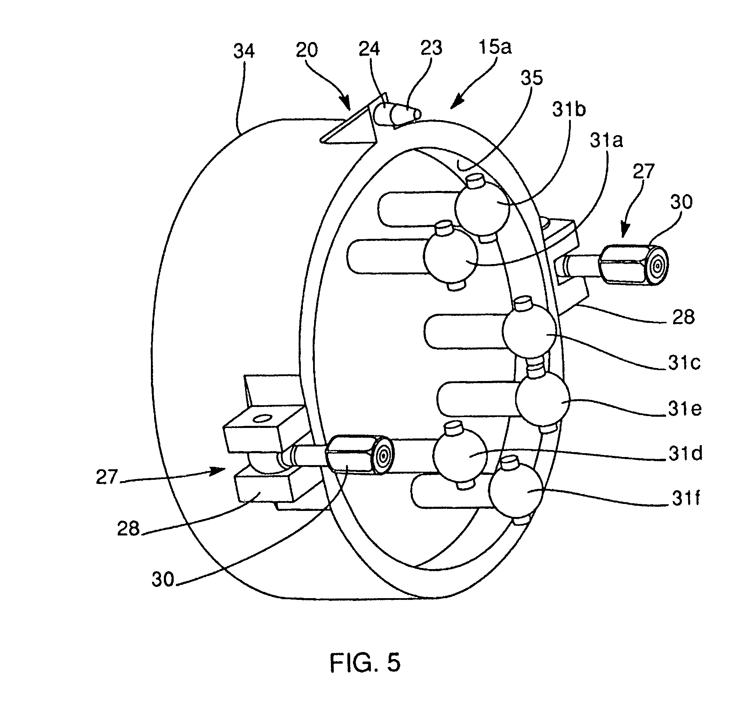

Sur la figure 5, un moyen 15a de solidarisation et de désolidarisation comporte des éléments identiques ou fonctionnellement équivalents aux éléments de l'interface 15a des figures 3 et 4, et repérés par des chiffres de référence identiques aux chiffres de référence des figures 3 et 4.

L'extrémité arrière 34 est montée à demeure sur le tube de raccordement 17 tandis que l'extrémité avant comporte un alésage 35 cylindrique destiné à coiffer la collerette 26 après engagement et coopération des moyens de guidage 20 et 21 situés respectivement sur les moyens 15a et 15b de solidarisation et de désolidarisation.

L'invention couvre toute modification de forme et toute variante de réalisation restant dans le cadre des revendications. L'essentiel est que le télémanipulateur modulaire puisse être séparé en au moins quatre éléments facilitant la maintenance et accroissant la productivité de télémanipulation.

## Revendications

1. Télémanipulateur, du type comportant un bras maître (16) et un bras esclave (11) destiné à reproduire les mouvements du bras maître (16) ; ledit bras esclave (11) étant situé à l'intérieur d'une enceinte de confinement et étant apte à être dételé, ledit bras maître (16) étant situé à l'extérieur de l'enceinte de confinement et lesdits bras maître (16) et esclave (11) étant reliés par un mécanisme (13) traversant une paroi (P) de l'enceinte de confinement ; ledit bras maître (16) étant relié à un tube de raccordement (17) audit mécanisme (13) traversant la paroi (P) de l'enceinte de confinement; le mécanisme traversant (13) étant monté à demeure dans la paroi (P) et présentant une première interface 12b, 12a de raccordement avec le bras esclave (11) et une deuxième interface 14a, 14b avec le tube de raccordement (17) ; **caractérisé en ce que** le bras maître (16) et le tube de raccordement (17) sont reliés à des moyens (15a, et 15b) de solidarisation et de désolidarisation déterminés pour permettre leurs connexions ou déconnexions modulaires, de manière à faciliter la maintenance du télémanipulateur et en accroître la productivité.

2. Télémanipulateur selon la revendication 1, **caractérisé en ce que** lesdits moyens (15a, 15b) de solidarisation et de désolidarisation comportent des moyens (20, 21) de guidage.

3. Télémanipulateur selon la revendication 2, **caractérisé en ce que** les moyens (20, 21) de guidage comportent un pion de guidage avec une partie d'engagement conique (23) et une partie cylindrique (24) aptes à s'engager dans un alésage (25) cylindrique complémentaire.

4. Télémanipulateur selon l'une quelconque des revendications précédentes, **caractérisé en ce que** lesdits moyens (15a, 15b) de solidarisation et de désolidarisation comportent des moyens de centrage (26, 35).

5. Télémanipulateur selon la revendication 4, **caractérisé en ce que** les moyens de centrage comportent deux brides concentriques (26, 35) aptes à s'engager coaxialement l'une dans l'autre.

6. Télémanipulateur selon l'une quelconque des revendications précédentes, **caractérisé en ce que** lesdits moyens (15a, 15b) de solidarisation et de désolidarisation comportent des moyens (27, 29) d'attelage et de dételage.

7. Télémanipulateur selon la revendication 6, **caractérisé en ce que** les moyens (27, 29) d'attelage et de dételage comportent un boulon de serrage pivotant dans une chape (28) apte à s'engager avec une pièce (29) de fixation correspondante.

8. Télémanipulateur selon l'une quelconque des revendications précédentes, **caractérisé en ce que** lesdits moyens (15a, 15b) de solidarisation et de désolidarisation comportent des moyens de transmission de mouvement (31a-31f, 32a-32f).

9. Télémanipulateur selon la revendication 8, **caractérisé en ce que** lesdits moyens de transmission de mouvement comportent des organes coopérants (31a-31f, 32a-32f, 33a-33f).

10. Télémanipulateur selon l'une quelconque des revendications précédentes, **caractérisé en ce que** lesdits moyens (15a, 15b) de solidarisation et de désolidarisation comportent un bloc (15a) d'adaptation intermédiaire.

## Patentansprüche

1. Fernbedienungsgerät von einem Typ, welcher einen Steuerarm (16) und einen gesteuerten Arm (11) umfasst, welcher vorgesehen ist, die Bewegungen des Steuerarmes (16) zu reproduzieren; wobei sich der genannte gesteuerte Arm (11) im Inneren einer Isolierkammer befindet und abgekoppelt werden kann, wobei sich der genannte Steuerarm (16) außerhalb der Isolierkammer befindet, und der genannte Steuerarm (16) und der genannte gesteuerte Arm (11) miteinander durch einen Mechanismus (13) verbunden sind, welcher eine Wand (P) der Isolierkammer durchquert; wobei der genannte Steuerarm (16) über ein Verbindungsrohr (17) mit dem genannten Mechanismus (13) verbunden ist, welcher die Wand (P) der Isolierkammer durchquert; wobei der die Wand durchquerende Mechanismus (13) in einem Sitz in der Wand (P) gelagert ist und eine erste Verbindungsschnittstelle (12b, 12a) zu dem gesteuerten Arm (11) und eine zweite Schnittstelle (14a, 14b) zu dem Verbindungsrohr (17) besitzt; **dadurch gekennzeichnet, dass** der Steuerarm (16) und das Verbindungsrohr (17) über eine lösbare Kupplung (15a, 15b) verbunden sind, welche vorgesehen ist, um ihre modulare Verbindung oder Trennung zu ermöglichen, derart, um die Wartung des Fernbedienungsgerätes zu erleichtern, und die Produktivität zu erhöhen.

2. Fernbedienungsgerät gemäß Anspruch 1, **dadurch gekennzeichnet, dass** die genannte Kupplung (15a, 15b) Führungsmittel (20, 21) umfasst.

3. Fernbedienungsgerät gemäß Anspruch 2, **dadurch gekennzeichnet, dass** die Führungsmittel (20, 21) einen Führungsbolzen mit einem konischen Einführungsabschnitt (23) und einem zylindrischen Abschnitt (24) umfassen, welche in eine komplementäre zylindrische Bohrung (25) eingeführt werden können.

4. Fernbedienungsgerät gemäß einem der vorherigen Ansprüche, **dadurch gekennzeichnet, dass** die genannte Kupplung (15a, 15b) zentrierende Verbindungsmittel (26, 35) umfasst.

5. Fernbedienungsgerät gemäß Anspruch 4, **dadurch gekennzeichnet, dass** die zentrierenden Verbindungsmittel zwei konzentrische Flanschstücke (26, 35) umfasst, welche ineinander koaxial eingeführt werden können.

6. Fernbedienungsgerät gemäß einem der vorherigen Ansprüche, **dadurch gekennzeichnet, dass** die genannte Kupplung (15a, 15b) Spannbolzenverbindungen (27, 29) umfasst.

7. Fernbedienungsgerät gemäß Anspruch 6, **dadurch gekennzeichnet, dass** die Spannbolzenverbindungen (27, 29) einen Spannbolzen umfassen, welcher in einem Lagerbock (28) gelenkig gelagert ist, und mit einem entsprechenden Befestigungselement (29) in Eingriff gebracht werden kann.

8. Fernbedienungsgerät gemäß einem der vorherigen Ansprüche, **dadurch gekennzeichnet, dass** die genannte Kupplung (15a, 15b) Bewegungsübertragungsmittel (31a - 31f, 32a - 32f) umfasst.

9. Fernbedienungsgerät gemäß Anspruch 8, **dadurch gekennzeichnet, dass** die genannten Bewegungsübertragungsmittel zusammenwirkende Elemente (31a - 31f, 32a - 32f, 33a - 33f) umfassen.

10. Fernbedienungsgerät gemäß einem der vorherigen Ansprüche, **dadurch gekennzeichnet, dass** die genannte Kupplung (15a, 15b) einen Block (15a) als Zwischenstück umfasst.

## Claims

1. A telemanipulator, of the type comprising a master arm (16) and a slave arm (11) intended to reproduce the movements of the master arm (16); the said slave arm (11) being situated in the interior of a containment and being capable of being uncoupled, the said master arm (16) being situated on the exterior of the containment and the said master arm (16) and slave arm (11) being connected by a mechanism (13) passing through a wall (P) of the containment; the said master arm (16) being connected by a connection tube (17) to the said mechanism (13) passing through the wall (P) of the containment; the passing through mechanism (13) being permanently mounted in the wall (P) and having a first interface 12b, 12a for connection with the slave arm (11) and a second interface 14a, 14b for connection with the connection tube (17),
**characterised in that** the master arm (16) and the connection tube (17) are connected to determined connection and disconnection means (15a and 15b) to allow their modular connection or disconnection, so as to facilitate the maintenance of the telemanipulator and to increase its productivity.

2. A telemanipulator according to Claim 1,
**characterised in that** the said connection and disconnection means (15a, 15b) comprise guide means (20, 21).

3. A telemanipulator according to Claim 2,
**characterised in that** the guide means (20, 21) comprise a guide pin with a conical engagement portion (23) and a cylindrical portion (24) capable of engaging in a complementary cylindrical bore (25).

4. A telemanipulator according to any one of the preceding Claims,
**characterised in that** the said connection and disconnection means (15a, 15b) comprise centring means (26, 35).

5. A telemanipulator according to Claim 4,
**characterised in that** the centring means comprise concentric collars (26, 35) capable of engaging coaxially in one another.

6. A telemanipulator according to any one of the preceding Claims,
**characterised in that** the said connection and disconnection means (15a, 15b) comprise coupling and uncoupling means (27, 29).

7. A telemanipulator according to Claim 6,
**characterised in that** the coupling and uncoupling means (27, 29) comprise a clamping bolt pivoting in a fork joint (28) capable of engaging with a corresponding fastening piece (29).

8. A telemanipulator according to any one of the preceding Claims,
**characterised in that** the said connection and disconnection means (15a, 15b) comprise movement transmission means (31a - 31f, 32a - 32f).

9. A telemanipulator according to Claim 8,
**characterised in that** the said movement transmission means comprise cooperating members (31a - 31f, 32a - 32f, 33a - 33f).

10. A telemanipulator according to any one of the preceding Claims,
**characterised in that** the said connection and disconnection means (15a, 15b) comprise an intermediate adapter unit (15a).
